# EUROPÄISCHE PATENTSCHRIFT

(11) **EP 4 186 672 B1**
(45) Veröffentlichungstag und Bekanntmachung des Hinweises auf die Patenterteilung: **11.03.2026**
(21) Anmeldenummer: 22208053.3
(22) Anmeldetag: 17.11.2022
(51) Int. Cl.: B29C 45/00, B29C 45/34, B29C 45/63, B29C 44/04, B29C 44/42, B29C 45/18, B29C 45/26, B29C 45/17, B29C 44/34, B29L 31/30, B29K 105/04, B29K 67/00, B29K 71/00, B29K 77/00, B29K 81/00

(54) **LANGGEZOGENES SPRITZGUSSBAUTEIL**
ELONGATED INJECTION-MOLDED COMPONENT
COMPOSANT MOULÉ PAR INJECTION ÉTIRÉ LONG

(30) Priorität: 24.11.2021 DE 102021130842
(43) Veröffentlichungstag der Anmeldung: 31.05.2023
(73) Patentinhaber: Pollmann International GmbH, 3822 Karlstein (AT)
(72) Erfinder: Hunziker, Urs, 8706 Meilen (CH); Rametsteiner, Karl, 4040 Linz (AT); Schmidt, Roman, 3813 Dietmanns (AT); Kitzler, Matthias, 3822 Karlstein (AT)
(74) Vertreter: Dilg, Haeusler, Schindelmann Patentanwaltsgesellschaft mbH

(56) Entgegenhaltungen:
- EP-A1- 2 357 070
- EP-A1- 2 792 464
- WO-A1-02/26482
- DE-A1- 10 009 559
- US-A1- 2018 215 909

## Beschreibung

### Technisches Gebiet

Die vorliegende Erfindung betrifft ein Bauteil mit einem spritzgegossenen Grundkörper sowie ein Verfahren zum Herstellen des Bauteils. Ferner betrifft die vorliegende Erfindung ein Kraftfahrzeug mit dem Bauteil.

### Hintergrund der Erfindung

Insbesondere in der Automobilindustrie werden faserverstärkte Spritzgussbauteile eingesetzt. Dabei dient die Zugabe von Verstärkungsfasern zur Erhöhung der Festigkeit des Bauteils. Allerdings sind beispielsweise glasfaserverstärkte Bauteile mit langen Fließwegen und Wandstärken von unter 2 mm bisher nur mit Eigenschaftseinbußen möglich. Beispielsweise werden bei dünnwandigen Bauteilen mit langen Fließwegen mangelnde Oberflächenbeschaffenheiten, Festigkeiten und eine mangelnde Konizität erzielt. Insbesondere bestehen schrumpfungsbedingte Ausformungsprobleme, wie z.B. ein Haften am Form-Innendorn bei einem Rohr als Bauteil aufgrund von Schrumpfungen im Abkühlprozess.

Ferner richten sich beim Kunststoffspritzguss, insbesondere mit Glasfaserzugabe, die Fasern entlang des Fließwegs hochgradig parallel aus. Dies bedeutet, dass die eigentlich zur Festigkeitsverbesserung eingesetzten Fasern quer zum Fließweg keine wesentlich höhere Festigkeit liefern, da diese parallel zu Fließrichtung ausgerichtet sind und Glasfasern nur entlang ihrer Längsrichtung einen Verstärkungseffekt erzeugen können.

Dies zeigt sich insbesondere durch schnell abfallende Festigkeitswerte, wenn bei einem Zugtest die Zugrichtung nicht in der Richtung der entlang des Fließwegs ausgerichteten Fasern anliegt. Es wurde bei Untersuchungen festgestellt, dass das resultierende Bauteilversagen häufig von einem einzelnen Point of Failure (dem schwächsten Verbundpunkt in der Belastungszone) ausgeht und sich dann durch Überlastung der Nachbarstrukturen sehr schnell im Material des Bauteils fortsetzt.

US 2018/0215909 A1 offenbart ein faserverstärktes Bauteil mit einer Polymermatrix und einer Vielzahl an langen Verstärkungsfasern. Die Polymermatrix bildet dabei 30 bis 90 Gewichtsprozent des Bauteils. Die Fasern bilden je nach Anteil der Polymermatrix 10 bis 70 Gewichtsprozent des Bauteils aus. Die Länge der Verstärkungsfasern kann beispielsweise zwischen 1 mm und ungefähr 25 mm liegen.

DE 100 09 559 A1 offenbart ein Verfahren zur Herstellung eines expansionsgeformten Gegenstandes aus faserverstärktem thermoplastischen Harz. Insbesondere wird offenbart, dass mittels einer Saugvorrichtung eine Saugkraft erzeugt wird, um Unterdruck in der Spritzgussform zu erzeugen.

EP 2 357 070 A1 offenbart ein Verfahren zum Spritzgießen von Kondensationsharzen aus der Schmelze oder Suspension/Lösung, damit hergestellte Formkörper sowie ein Spritzgusswerkzeug, mit dem das Verfahren durchgeführt werden kann. Ein Spritzgusswerkzeug wird beschrieben, das Gasaustrittsöffnungen und/oder Wände aus porösen Materialien, z.B. Sintermetallen, aufweist.

WO 02/26482 A1 offenbart ein spritzgegossenes Bauteil mit Verstärkungsfasern. Das Bauteil enthält eine Vielzahl von, in einer Polymermatrix dispergierten Fasern, wobei mindestens 10 % der Gesamtzahl der Fasern eine Länge von mehr als 0,55 mm aufweisen. Die maximale Dicke des gegossenen Bauteils beträgt nicht mehr zwischen 1 mm und 2 mm. Ferner wird ein Schaumaterial verwendet, in welchem das Hohlraumvolumen mindestens etwa 5 % beträgt.

### Darstellung der Erfindung

Es ist eine Aufgabe der vorliegenden Erfindung, ein robustes und in viele Richtungen belastbares spritzgegossenes Bauteil bereitzustellen.

Diese Aufgabe wird mit einem Bauteil, einem Verfahren zum Herstellen des Bauteils gemäß den Gegenständen der unabhängigen Ansprüche gelöst.

Gemäß einem ersten Aspekt der vorliegenden Erfindung wird ein Bauteil mit einem spritzgegossenen Grundkörper beschrieben. Der Grundkörper weist eine Wandstärke von weniger als 1,9 mm auf. In dem Grundkörper sind eine Vielzahl von Gasblasen und Verstärkungsfasern eingebettet. Eine Fließweglänge des spritzgegossenen Grundkörpers beträgt über 300 mm. Der Grundkörper weist Zersetzungspartikel eines Gasblasen-bildenden Treibmittels auf, wobei ein Volumenanteil der Zersetzungspartikel des Treibmittels im Grundkörper 0,1% bis 7% beträgt.

Der Grundkörper bildet einen Bereich des Bauteils oder das gesamte Bauteil aus. Der Grundkörper kann dabei einen Vollkörper aus einem Vollmaterial ausbilden. Die Wandstärke wird in diesem Fall durch die Materialdicke bzw. dem Durchmesser definiert. Ferner kann der Grundkörper einen Hohlkörper ausbilden, wobei der Hohlkörper zumindest teilweise ein inneres Volumen des Bauteils umschließt. Der Grundkörper kann somit ein Gefäß mit zumindest einer offenen Seite ausbilden. Insbesondere bildet der Grundkörper ein spritzgegossenes Rohr aus. Die Wandstärke bildet dann die Dicke einer Wand, die einen Hohlraum zumindest teilweise umgibt, aus.

Insbesondere wird die Wandstärke an dem dicksten Bereich des Grundkörpers bestimmt. Mit anderen Worten weist der Grundkörper im Wesentlichen keinen Bereich auf, dessen Wandstärke größer als 1,9 mm (Millimeter) ist. Dabei bezieht sich die Wandstärke nur auf die Wandung des Grundkörpers, sodass von dieser Betrachtung zusätzliche funktionelle Komponenten, wie Befestigungen, Klemmrippen, Haltenippel oder ähnliches, welche z.B. eine Erweiterung der geometrischen Rohrförmigkeit beinhalten und im gleichen Schuss erstellt werden, nicht die Wandstärke des Grundkörpers definieren.

Insbesondere ist der Grundkörper ein spritzgegossenes Bauteil. Dabei wird als Ausgangsmaterial ein Kunststoffgranulat einem Extruder zugeführt, in welchem der Kunststoff verflüssigt wird. Anschließend wird der verflüssigte Kunststoff in eine Spritzgussform unter Druck eingespritzt, um den Grundkörper auszubilden. In dem Extruder werden zudem die Verstärkungsfasern als Füllstoff hinzugefügt. In dem Extruder wird ferner ein gasblasen-bildendes Medium in Gasform oder als Feststoff zugeführt. Insbesondere wird ein Treibmittel als Feststoff vor oder in dem Extruder hinzugefügt, welches dann in der Spritzgussform die Gasblasen bildet.

Der maximale Fließweg im Grundkörper ist die Entfernung zwischen Anschnitt (d.h. den Ort an der Spritzgussform, wo das verflüssigte Material in die Spritzgussform eingebracht wird) und dem zuletzt gefüllten Bereich (also dem Ende der Spritzgussform in Fließrichtung des flüssigen Materials). Am Grundkörper wird die Strecke vom Anschnitt bis zum Fließwegende gemessen. Teilt sich der Schmelzestrom des Materials in der Spritzgussform in mehrere Fließwege auf, z.B. an Durchbrüchen, so gilt für die Bemessung des jeweils der Fließweglänge der längste mögliche Fließweg des Materials in der Spritzgussform.

Erfindungsgemäß weist das Bauteil eine Vielzahl einzelner (beabstandeter) kleiner Gasblasen auf, sodass eine sehr geringe Gasblasenkonzentration vorliegt. Damit wird eine Festigkeitsverbesserung erreicht, da die Gasblasen in der Spritzgussform die Verstärkungsfasern von der Längsausrichtung in Fließrichtung abdrängen und somit eine Ausrichtung der Verstärkungsfasern quer, d.h. mit einem Winkel, zur Fließrichtung ausbilden. Durch das Aufgehen der Gasblasen wird erreicht, dass sich die Fasern weniger parallel anordnen (d.h. die Fasern werden durch eine kleine benachbarte Gasblase aus der parallelen Ausrichtung weggedrückt). Insbesondere bei chemischem Treibmittel ist der Druck und der zeitliche Verlauf der Gasblasenbildung gut steuerbar. Dies führt zu einem mikroskalinen Verstrebungseffekt der Verstärkungsfasern quer zur Fließrichtung. Die Gasblasen stören somit den laminaren Fluss, ähnlich einem Brückenpfeiler in einem Bach mit Geschiebe. Die Fasern weichen von Ihrer homogenen Verteilung ab, wodurch wiederum eine Querverstrebung bewirkt wird.

Ferner wird durch die Gasblasen eine zusätzliche Elastizität in das Bauteil eingebracht. Ein sogenannter Point of Failure, an welchem das Bauteil im Zugversuch reißt, wird zu einer größeren Zone anstatt eines Punktes im Bruchverhalten. Eine größere Zone wiederum ist mittelwertbildend, wodurch das schwächste Glied erst später versagt, da sich die Kräfte durch die Elastizität auf benachbarte Faserverbunde besser verteilen (die in der Regel nicht gleich das zweitschwächste Glied darstellen).

Aufgrund der Festigkeitserhöhung des erfindungsgemäßen Bauteils, insbesondere gegenüber einer Krafteinwirkung senkrecht zur Fließrichtung, können spritzgegossene Bauteile mit einer äußerst dünnen Wandstärke (1,9 mm) jedoch mit einer äußerst langen Fließweglänge von über 300 mm geschaffen werden. Zusammen mit den Verstärkungsfasern und den eingebrachten Gasblasen wird somit ein langgezogenes Spritzgussbauteil (beispielsweise ein Rohr) ermöglicht, dessen Festigkeit deutlich höher gegenüber gasblasenfreien Spritzgussbauteilen liegt.

Die erfindungsgemäße minimale Gasbeigabe beim Spritzguss erlaubt damit konstruktive Optimierungsmöglichkeit gegenüber gasblasenfreien Spritzgussbauteilen. Bei gleicher Wandstärke gegenüber gasblasenfreien Spritzgussbauteilen kann das erfindungsgemäße Bauteil ein geringeres Gewicht, eine geringere Biegesteifigkeit und ein gleiches Widerstandsmoment aufweisen.

Bei gleicher Biegesteifigkeit gegenüber gasblasenfreien Spritzgussbauteilen kann das erfindungsgemäße Bauteil eine etwas größere Wandstärke jedoch bei leicht reduziertem Gewicht und erhöhten Widerstandsmoment aufweisen.

Bei gleichem Gewicht des Bauteils gegenüber gasblasenfreien Spritzgussbauteilen kann das erfindungsgemäße Bauteil eine etwas größere Wandstärke jedoch bei größerer Biegesteifigkeit und einem größeren Widerstandsmoment aufweisen.

Durch das Einbringen der Gasblasen verringert sich die Dichte und der Zug-E-Modul des Bauteils. Bezogen auf das Gewicht erhöht sich aber jedenfalls die Steifigkeit des Bauteils.

Ferner ergibt sich in dem erfindungsgemäßen Bauteil eine Ausformung einer einheitlicheren Oberfläche als bei einem Bauteil ohne Gasblasen. Dies wird durch die Druckausbreitung der Gasblasen begründet, welche es erlauben, den Nachdruck beim Spritzguss zu reduzieren. Durch die erfindungsgemäße Verwendung der Gasblasen lässt sich der Innendruck im Bauteil während der Abkühlphase besonders gut hochhalten. Aufgrund der langen Fließwege kann dies nicht mittels Nachdrucks zusätzlich erreicht werden. Durch eine niedrige Viskosität und der dadurch bedingten raschen Füllung der Kavitäten in der Spritzgussform kommt es zu keinen bzw. geringeren inneren Temperaturgradienten, so dass die Homogenität der Schmelze, insbesondere in Hinblick auf die Oberflächeneigenschaften des Spritzgussbauteils, erhalten bleibt. Somit entsteht keine Schlierenbildung auf der Oberfläche, wobei die Schlierenbildung zu Oberflächenstörungen beiträgt, sodass komplexere Bauteile gespritzt werden können.

Gemäß einer weiteren beispielhaften Ausführungsform beträgt die Fließweglänge über 380 mm, insbesondere über 450 mm, weiter insbesondere über 500 mm. Mit der erfindungsgemäßen Beimischung von Gasblasen und Verstärkungsfasern sind dabei sogar Fließweglänge von über 380 mm und mehr möglich, da eine ausreichende Festigkeit aufgrund der Faserausrichtung der Verstärkungsfasern nicht parallel, d. h. mit einem Winkel zur Fließrichtung, erzielt werden kann.

Gemäß einer weiteren beispielhaften Ausführungsform kann ebenfalls die Wandstärke unter 1,8 mm, insbesondere unter 1,7 mm, weiter insbesondere unter 1,5 mm, weiter insbesondere unter 1,4 mm festgelegt werden. Besonders gute Eigenschaften des Bauteils gegenüber gasblasenfreien Spritzgussbauteil sind erzielt worden, wenn der Grundkörper deutlich länger als die dünnste Wandstärke ist. Dies ist entsprechend möglich mit der erfindungsgemäßen Beimischung von Gasblasen und Verstärkungsfasern, da eine ausreichende Festigkeit aufgrund der Faserausrichtung der Verstärkungsfasern nicht parallel, d. h. mit einem Winkel zur Fließrichtung, erzielt werden kann.

Gemäß einer weiteren beispielhaften Ausführungsform weist der Faseranteil der Verstärkungsfasern im Grundkörper 5 Gew.% bis 60 Gew.% insbesondere 10 Gew.% bis 50 Gew.%, weiter insbesondere 20 Gew.% bis 40 Gew.% aufweist. Durch diese erfindungsgemäße Gasblasenbeigabe wird die Fließfähigkeit (im Sinne einer Reduktion der Gesamtviskosität) erhöht, was es wiederum erlaubt gleiche Fließweglängen zu erreichen wie ohne Gasblasen aber mit einer tieferen Dosierungstemperatur. Diese Effekte wurden mit den oben beschriebenen Faseranteilen an Verstärkungsfasern von 5% bis 60%, bevorzugt von 10% bis 50%, besonders bevorzugt 20% bis 40% erzielt.

Gemäß einer weiteren beispielhaften Ausführungsform weist der Grundkörper zumindest einen rohrartigen Abschnitt auf. Insbesondere kann der gesamte Grundkörper als Rohr ausgebildet sein. Gerade bei einer rohrartigen Ausbildung des Grundkörpers, wo große Fließweglänge im Vergleich zu dünnen Wandstärken auftreten, wird eine deutliche Qualitätsverbesserung aufgrund der erstrebten Verstärkungsfasern erzielt. Bei dem Spritzgießen eines Rohres wird das viskose Spritzgussmaterial zwischen einer äußeren Wandung der Spritzgussform und einem inneren Dorn gedrückt. Die Wandreibung an dem inneren Dorn und der äußeren Wandung führt in der Regel zu einer starken parallelen Ausrichtung der Verstärkungsfasern entlang der Fließrichtung. Das Aufblähen der Gasblasen führt hingegen zu einem Ablenkungseffekt der Verstärkungsfasern fort von der Parallelrichtung zur Fließrichtung, sodass die Verstrebungen der Verstärkungsfasern erzielt werden und eine höhere Festigkeit in Rohrquerrichtung erzeugt wird.

Gemäß einer weiteren beispielhaften Ausführungsform ist der Grundkörper derart ausgebildet, dass der Grundkörper einen Temperatur-Schockwechseltest in einem Temperaturbereich zwischen -30 °C und +90 °C, insbesondere zwischen -40 °C und 120 °C standhält. Dabei wird das Bauteil innerhalb kurzer Zeitintervalle, beispielsweise unter 10 Sekunden, insbesondere unter 5 Sekunden, einem negativen Extrem-Temperaturwert und einem positiven Extrem-Temperaturwert ausgesetzt, um die Temperaturbeständigkeit zu testen. Das erfindungsgemäße Bauteil mit den Gasblasen und den Verstärkungsfasern kann sogar einen Schockwellentest im Bereich von - 40 °C und 120 °C standhalten, wenn Abkühlungsgeschwindigkeiten beim Spritzgussprozess entsprechend angepasst werden und/oder eine zusätzliche Anpassung des Nachdruckes erfolgt.

Gemäß einer weiteren beispielhaften Ausführungsform weist der Grundkörper eine Verarbeitungsschwindung nach einem 2-tägigen Lagerzeitraum bei Raumtemperatur nach dem Spritzgiessen von 0,03% bis 1,5%, insbesondere von 0,05% bis 0,5%, bezüglich Länge oder Durchmesser auf. Für den 2-tägigen Lagerzeitraum wird die Raumtemperatur insbesondere auf 20 °C bei 45% rel. Luftfeuchtigkeit und einem konstanten Luftdruck von ca. 1013,25 hPa angesetzt.

Aufgrund des Abkühlens und des Ausgasens des Bauteils während oder nach dem Spritzgussvorgang beginnt eine Schwindung des Bauteils. Auch während des Lebenszyklus des Bauteils findet aufgrund von äußeren physikalischen Einflüssen eine Schwindung statt. Eine Schwindung bedeutet, dass sich das Bauteil in seinen geometrischen Ausmaßen verkleinert. Dabei wird eine Verarbeitungsschwindung definiert, wenn die Schwindung unmittelbar beim Spritzgießen und nach dem Spritzgießen bis zur Abkühlung auf Raumtemperatur vorliegt. Ab ca. zwei Wochen nach dem Spritzgießen wird die weitere Schwindung als Nachschwindung bezeichnen.

Die kleinere Verarbeitungsschwindung des erfindungsgemäßen Bauteils gegenüber einem Spritzgussbauteil ohne Gasblasen begründet sich dadurch, dass insbesondere die Gasblasen, insbesondere aufgrund des Treibmittels, während des Abkühlvorgangs des Bauteils weiter expandieren und somit der Schwindung entgegenwirken.

Gemäß einer weiteren beispielhaften Ausführungsform weist der Grundkörper eine Nachschwindung über einen Zeitraum von 5 Tagen von 0,01% bezüglich Länge oder Durchmesser aufweist. Die Nachschwindung tritt nach z.B. 2 Wochen ein. Der Prozess der Nachschwindung dauert entsprechend länger, wobei hier die Veränderung geringer ist. Insbesondere Schwundreduktionsversuche bei Bauteilen mit hohem Nachdruck und keinem Gasblasenanteil haben gezeigt, dass dies zu schlechteren Oberflächenqualitäten und mehr Schwindung führt im Gegensatz zu dem erfindungsgemäßen Bauteil. Dadurch ergibt sich eine Reduktion der Schwindung des erfindungsgemäßen Bauteils zwischen dem Schuss (d.h. dem Eintreiben der Spritzgussmasse in die Spritzgussform) und Ausformung um mehr als 1/100 mm, mehr als 3/100 mm, insbesondere mehr als 5/100 mm, gegenüber einem mit der gleichen Form hergestellten Bauteil ohne Gasblasen. Dies erlaubt auch eine einfache Entformung des spritzgegossenen Bauteils, da kaum Organgenhauteffekt auf der Oberfläche, der bevorzugt an gewissen Teilen der Spritzgussform, z.B. bei Innendornen der Spritzgussform, anhaftet.

Die Schrumpfungsreduktion des erfindungsgemäßen Bauteils durch die Gasblasen führt zu einer homogeneren Oberfläche und eine mikroskaline Orangenhaut wird verhindert. Insbesondere entsteht durch die chemische Gasblasenerzeugung auch an den Endstellen der Fließwege dieselbe Oberflächenqualität wie in der Region der Einspritzstelle (Anschnitt). Dies lässt sich dadurch erklären, dass die Gasblasen über die ganze Länge des Fließwegs ein inhärentes Nachdrücken im Abkühlprozess erzeugen, welches sich so sowohl auf die Oberflächenqualität als auch auf die Schwindung des Bauteils positiv auswirken. So lässt sich auch auf der Innenseite eines rohrartigen oder rohrförmigen Bauteils (insbesondere auch bei Produkten, welche ineinandergleitende Teleskoprohre sind) eine Hochglanzqualität erreichen, welche wegen der reduzierten Schwindung insbesondere bei der Ausformung keine Neigung zum Zerkratzen der Oberfläche zeigt. Insbesondere ist die Qualität der Oberfläche des erfindungsgemäßen Bauteils ein Viertel der Fließweglänge vom Ende des Fließwegs gleich als ein Viertel des Fließwegs vom Anfang des Fließwegs (d.h. am Anschnitt).

Gemäß einer weiteren beispielhaften Ausführungsform weist der Grundkörper einen Volumenanteil an Gasblasen zwischen 0,3% bis 8%, insbesondere zwischen 0,6% bis 5%, weiter insbesondere zwischen 1,5% bis 3% auf. Der beschriebene Volumenanteil bezieht sich auf die Volumenprozent gegenüber dem Vollvolumen des Grundkörpers. Bei zu wenigen Gasblasen tritt kein oder zu wenig Ablenkung der Verstärkungsfasern ein, bei zu vielen Gasblasen bricht die Festigkeit zusammen. Mit dem oben beschriebenen Gasblasenanteil sind besonders gute Effekte bei einer gasblasenbedingten Dichtereduktion des Spritzgussteils möglich.

Gemäß einer weiteren beispielhaften Ausführungsform weisen alle, mindestens 80%, oder mindestens 60% der Gasblasen einen Durchmesser zwischen 1 Mikrometer bis 100 Mikrometer, insbesondere 2 Mikrometer bis 50 Mikrometer, weitere insbesondere 2 Mikrometer bis 10 Mikrometer auf. Mit dem oben beschriebenen Durchmesser der Gasblasen sind besonders gute Effekte bei einer gasblasenbedingten Dichtereduktion des Spritzgussteils möglich. Die Größe der Gasblasen kann beispielsweise durch die Wahl des Treibmittels, die Temperatur des Materials während der Spritzgießens, sowie mit der Abkühlgeschwindigkeit eingestellt werden.

Erfindungsgemäß weist der Grundkörper Zersetzungspartikel eines Gasblasen-bildenden Treibmittels auf. Die Zersetzungspartikel sind in dem Grundkörper vorzufinden und bilden feste Zersetzungsrückstande des ursprünglichen Treibmittels als Nebenprodukt der Gasbildung. Ein typisches Beispiel eines solchen Treibmittelnebenproduktes sind Metalloxyde.

Erfindungsgemäß beträgt ein Volumenanteil der Zersetzungspartikel des Treibmittels im Grundkörper zwischen 0,1% bis 7%, insbesondere zwischen 0,3% bis 4%, weiter insbesondere zwischen 0,5% bis 2%. Der beschriebene Volumenanteil bezieht sich auf die Volumenprozent gegenüber dem Vollvolumen des Grundkörpers.

Gemäß einer weiteren beispielhaften Ausführungsform ist das Treibmittel ein chemisches Treibmittel, welches insbesondere exotherm reaktionsfähig ist, wobei insbesondere zumindest mehr als die Hälfte, insbesondere mehr als 80% oder alle, der Zersetzungspartikel des Treibmittels einen Durchmesser zwischen 0,1 Mikrometer bis 50 Mikrometer, insbesondere zwischen 1 Mikrometer bis 3 Mikrometer, aufweisen.

Bei den Treibmitteln existieren endotherm sowie exotherm reagierende Treibmittel. Insbesondere exotherme Treibmittel sind vorteilhaft, weil durch die freiwerdende Energie eine längere Flüssigphase in langen Fließwegen bei dem Spritzgussmaterial in der Spritzgussform erreicht wird. Dies hängt insbesondere damit zusammen, dass die thermische Wirksamkeit geometrisch im Nahfeld der Gasblase beschränkt bleibt. Ferner führen chemische Treibmittel zu einer homogeneren Gasblasenverteilung als z.B. physikalische Treibmittel. Zusätzlich ist die Gasblasenentstehung bei chemischen Gaserzeugungsformen gegenüber den physikalisch erzeugten Gasblasen zeitlich verzögert, sodass die Gasblasenbildung später in der Spritzgussform gesteuert werden kann.

Gemäß einer weiteren beispielhaften Ausführungsform liegen die Gasblasen, insbesondere zumindest 80% aller Gasblasen, beabstandet voneinander im Grundkörper vor. Durch die erfindungsgemäße Beigabe von Gasblasen sind diese in einer Menge in dem Grundkörper vorhanden, in welcher sie mehrheitlich diskret in der Masse verweilen und nicht einen Schaumcharakter, bei dem sich Gasblasen berühren, entwickeln. Insbesondere lässt sich diese erfindungsgemäß gewünschte Diskretheit der Blasen durch die Feinheit, bzw. dir Verteilung der Treibmittel steuern.

Gemäß einer weiteren beispielhaften Ausführungsform weist der Grundkörper zumindest ein Material auf bestehend aus der Gruppe umfassend Polyamide, insbesondere PA 6, 6.6, 4.6, 2.4, 11, aromatische und teilaromatische Polyamide (PA), Polysulfon (PSU), Polyphenylensulfid (PPS), Polyetherketone (PEK und PEEK) und Polyester (PET, PBT).

Gemäß einer weiteren beispielhaften Ausführungsform ist ein Verhältnis zwischen der Länge (z.B. die größte Erstreckung des Grundkörpers in eine Raumrichtung) des Grundkörpers und der dünnsten Wandstärke des Grundkörpers grösser als 50: 1, insbesondere grösser als 100:1, weiter insbesondere grösser als 200: 1 auf. Dies ist entsprechend möglich mit der erfindungsgemäßen Beimischung von Gasblasen und Verstärkungsfasern, da eine ausreichende Festigkeit aufgrund der Faserausrichtung der Verstärkungsfasern nicht parallel, d. h. mit einem Winkel zur Fließrichtung, erzielt werden kann.

Gemäß einer weiteren beispielhaften Ausführungsform weist die Mehrzahl (z.B. mehr als 50%, insbesondere mehr als 80% oder 90%) der Verstärkungsfasern im Grundkörper einen Durchmesser zwischen 2 Mikrometer und 100 Mikrometer, insbesondere zwischen 5 Mikrometer bis 24 Mikrometer, aufweisen, und/oder wobei die Mehrzahl (z.B. mehr als 50%, insbesondere mehr als 80% oder 90%) der Verstärkungsfasern im Grundkörper eine Länge zwischen 0,05 mm und 4 mm, insbesondere zwischen 0,1 mm und 1 mm, aufweisen.

Gemäß einer weiteren beispielhaften Ausführungsform weisen die Verstärkungsfasern zumindest ein Material auf bestehend aus der Gruppe Mineralfasern, insbesondere Silikate, Glas, Basalt, Asbest und Wollastonit, Carbonfasern, insbesondere Kohlenstoffnanoröhren, Polymerfasern, insbesondere Polyamid, Polyimid, Polyester, Polyolefine, Polyesteramide und Aramide, und Naturfasern, insbesondere Cellulose, Baumwolle, Viskose, Lyocell, Holz, Hanf und Seide.

Gemäß einem weiteren Aspekt der vorliegenden Erfindung wird ein Verfahren zum Herstellen des oben erläuterten Bauteils beschrieben. Gemäß dem Verfahren wird ein Grundkörper des Bauteils spritzgegossen, wobei der Grundkörper eine Wandstärke von weniger als 1,9 mm aufweist und wobei in dem Grundkörper eine Vielzahl Gasblasen und Verstärkungsfasern eingebettet werden. Eine Fließweglänge des spritzgegossenen Grundkörpers beträgt über 300 mm.

Zusammenfassend führen die insbesondere chemisch erzeugten Gasblasen zu einer besseren Stabilität langgezogener und dünnwandiger, spritzgegossener Bauteile. Dies ist u.a. auf die Nukleierungsmechanismen zurückgeführt, welche beispielsweise gestaffelt ablaufen. Einerseits bildet die Stirnseite einer Faser aufgrund ihrer inhärenten Aktivierung einen Nukleierungskern bzw. -zone, andererseits bilden die festen Zersetzungspartikel der chemischen Treibmittel nano- oder mikroskaline Zentren bzw. Nukleierungskerne. Diese zweiten Nukleierungskerne bilden sich aber erst später im Spritzgiessprozess, wenn chemische Treibmittel reagiert oder gar ausreagiert haben. Diese zeitliche Staffelung hilft im erfindungsgemäßen Herstellverfahren zusätzlich im Sinne einer länger andauerndem Viskositätsunterstützung und dadurch für das Erzielen von besseren Fließeigenschaften. So wurden besonders gute Eigenschaften erzielt, wenn Mehrzahl der verwendeten Fasern in einem exemplarisch beschrieben Durchmesserbereich und Längenbereich vorliegen.

Gemäß einer weiteren beispielhaften Ausführungsform wird die Schmelze-Massefließrate (MFI) eines Materials während des Spritzgießens des Grundkörpers über 200 g/10 min, insbesondere über 250 g/10 min, weiter insbesondere über 300 g/10 min eingestellt wird. Eine solch höhere Massefließrate kann zum Beispiel durch höhere Temperatur des eingespritzten Materials (z.B. Kunststoffes) erreicht werden. Dadurch wird zwar das Material thermisch hoch belastet, aber es werden so längere Fließwege möglich. So ist zum Beispiel der MFI von Highspeed Polyamid bei rund 100 g/10 min. Durch Überhitzung gegenüber der Nominaltemperatur um 30 °C kann ein MFI von über 200 g/10 min erreicht werden.

Gemäß einer weiteren beispielhaften Ausführungsform wird nach dem Spritzgießen des Grundkörpers und nach einer Ausformung des Grundkörpers, insbesondere als Rohrform, weniger als 20 mm, insbesondere weniger als 10 mm, weiter insbesondere weniger als 5 mm, weiter insbesondere weniger als 2 mm, von einem in Längsrichtung ausgebildeten Ende des Grundkörpers abgeschnitten.

Gemäß einer weiteren beispielhaften Ausführungsform wird der Grundkörper während des Spritzgiessens entlang eines Fließwegs einer Spritzgussform ausgebildet, wobei in einer Endzone des Fließwegs der Spritzgussform über Entlüftungen in der Spritgussform Unterdruck innerhalb der Spritzgussform beaufschlagt wird. Die Endzone bildet weniger als 30% der Gesamtlänge, insbesondere weniger als 20% der Gesamtlänge, weiter insbesondere weniger als 10% der Gesamtlänge des Fließwegs der Spritzgussform aus.

Dadurch werden insbesondere bei einer rohrartigen Ausbildung des Grundkörpers schadvolle bzw. qualitativ minderwertige Anfangs- und Endbereiche, welche abgeschnitten werden müssen, reduziert und die Abfallmenge reduziert. Durch die erfindungsgemäßen längeren Fließwege und besseren Eigenschaften kann so das spritzgegossene Bauteil weiter bis gegen das Ende des Fließweges in hoher Qualität genutzt werden. So kann im entsprechenden Spritzgussverfahren das Bauteil mit weniger Abschnitt und damit weniger Abfall produziert werden. Wenn z.B. der Grundkörper ein Rohr ist, sind über eine längere Strecke des Fließweges homogene Bauteileigenschaften möglich. Der Bereich der zunehmenden Inhomogenitäten am Rohrende / Rohranfang wird abgeschnitten und ist Abfall. Durch die erfindungsgemäße Lösung muss so weniger als 20 mm, bevorzugt um weniger als 10 mm, besonders bevorzugt um weniger als 5 mm, insbesondere besonders bevorzugt um weniger als 2 mm abgeschnitten und entsorgt/recycled werden. Insbesondere hilft das Entlüften oder Evakuieren in der Endzone (entspricht sozusagen dem Rohrende) des Fließweges, dass weniger Material abgeschnitten werden muss.

Gemäß einer weiteren beispielhaften Ausführungsform wird vor dem Spritzgießen das Treibmittel zu einem Material des Grundkörpers hinzugemischt wird, wobei ein Gewichtsanteil des Treibmittels an dem Gesamtmaterial vor dem Spritzgießen 1% beträgt.

Gemäß einer weiteren beispielhaften Ausführungsform reagiert während des Spritzgießens das Treibmittel exotherm und erzeugt in dem Grundkörper die Gasblasen und Zersetzungspartikel, wobei das Treibmittel derart vor dem Spritzgießen beigefügt wird, dass nach dem Spritzgießen insbesondere zumindest mehr als die Hälfte der Zersetzungspartikel des Treibmittels einen Durchmesser zwischen 0,1 Mikrometer bis 50 Mikrometer, insbesondere zwischen 1 Mikrometer bis 3 Mikrometer, aufweisen.

Gemäß einem weiteren Aspekt wird eine Herstellvorrichtung zum Herstellen eines oben beschriebenen Bauteils beschrieben. Die Herstellvorrichtung weist eine Spritzgussform zum Spritzgießen des Grundkörpers des Bauteils auf. Die Spritzgussform kann gegenüber üblichen Dimensionierungen überdimensioniert werden, um eine hohe Formstabilität zu erhalten. Diese besonders hohe Stabilität des Werkzeuges erlaubt es, eine Narbung an Werkzeugschließkanten der Spritzgussform (also z.B. an Kontaktbereichen von zwei Werkzeughälften der Spritzgussform (z.B., wenn jede Werkzeughälfte eine Rohrhalbschale darstellt) derart zu minimieren, dass im Bauteil bzw. im Grundkörper keine Oberflächenstörungen (Formkanten etc.) vorhanden sind.

Gemäß einer weiteren beispielhaften Ausführungsform der Herstellvorrichtung weist die Spritzgussform zumindest eine Entlüftung in einer Endzone eines Fließwegs der Spritzgussform auf, wobei die Entlüftung ausgebildet ist, Unterdruck innerhalb der Spritzgussform zu beaufschlagen. Die Endzone bildet weniger als 30% der Gesamtlänge, insbesondere weniger als 20% der Gesamtlänge, weiter insbesondere weniger als 10% der Gesamtlänge des Fließwegs der Spritzgussform aus. Beispielsweise kann eine Vakuumpumpe an die Entlüftung angeschlossen werden. Die Spritzgussform kann somit während dem Spritzen evakuiert werden. Dies führt zu einer verstärkten Ausbildung der Gasblasen und zu einer höheren Fließgeschwindigkeit des Materials. Dies kann dazu verwendet werden, noch längere Fließwege, höhere Produktionsgeschwindigkeiten und/oder bessere Endprodukteigenschaften (Festigkeit, Oberfläche, Schrumpfung oder Fließweglänge) zu erreichen. Derselbe Effekt kann durch unterschiedliche Wärmezonen in der Spritzgussform erreicht werden.

Gemäß einem weiteren Aspekt der vorliegenden Erfindung wird das oben beschriebene Bauteil in einem Kraftfahrzeug. Als Kraftfahrzeug kann beispielsweise ein Lkw, Pkw oder ein Elektrofahrzeug verstanden werden. Aufgrund der hohen Temperaturschwankungen insbesondere im Innenraum eines Kraftfahrzeugs kommen die Vorteile des erfindungsgemäßen Bauteils besonders zum Tragen. Beispielsweise bei ineinandergesteckten rohrförmigen Bauteilen, beispielsweise für den Öffnungsmechanismus von Heckklappen eines Kraftfahrzeugs, können die erfindungsgemäßen Bauteile verwendet werden, da diese eine hohe Querbelastung standhalten können, sodass ein Verklemmen zweier ineinander gesteckter Rohre reduziert werden kann. Insbesondere die geringe Wärmeausdehnung des erfindungsgemäßen Bauteils führt zu einer besonders guten Eignung im Kraftfahrzeug.

Es wird darauf hingewiesen, dass die hier beschriebenen Ausführungsformen lediglich eine beschränkte Auswahl an möglichen Ausführungsvarianten der Erfindung darstellen. Die Erfindung ist in den beigefügten Ansprüchen beschrieben.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 zeigt eine schematische Darstellung eines rohrförmigen Bauteils gemäß einer beispielhaften Ausführungsform der vorliegenden Erfindung.
Fig. 2 zeigt eine schematische Darstellung eines Bauteils mit den entsprechenden Gasblasen und Verstärkungsfasern gemäß einer beispielhaften Ausführungsform der vorliegenden Erfindung.
Fig. 3 zeigt eine schematische Darstellung eines Bauteils, welches in einer Spritzgussform während des Spritzschließens vorliegt gemäß einer beispielhaften Ausführungsform der vorliegenden Erfindung.
Fig. 4 zeigt eine schematische Darstellung einer Herstellvorrichtung gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

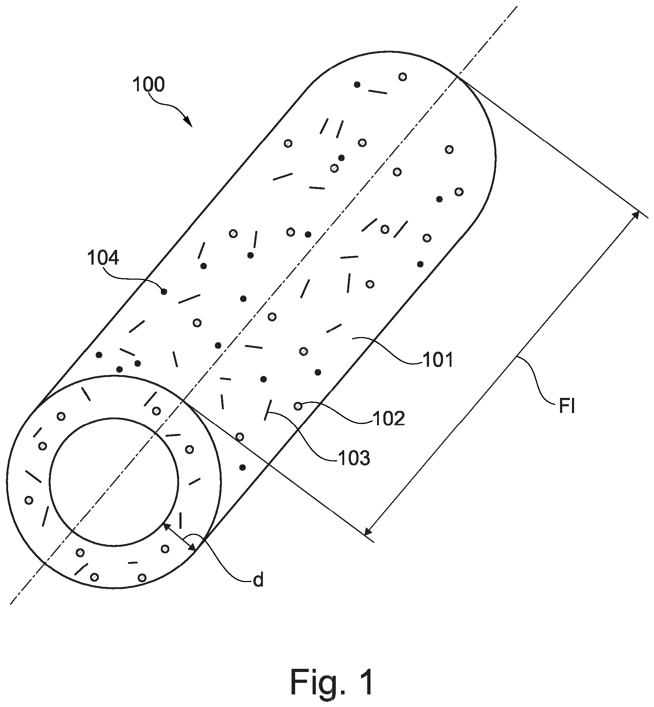

**Fig. 1** zeigt eine schematische Darstellung eines rohrförmigen Bauteils 100 gemäß einer beispielhaften Ausführungsform der vorliegenden Erfindung. Das Bauteil 100 weist einen spritzgegossenen Grundkörper 101 auf, wobei der Grundkörper 101 eine Wandstärke d von weniger als 1,9 mm aufweist und in dem Grundkörper 101 eine Vielzahl Gasblasen 102 und Verstärkungsfasern 103 eingebettet sind. Eine Fließweglänge FI des spritzgegossenen Grundkörpers 101 beträgt über 300 mm. Der Grundkörper 101 in Fig. 1 bildet ein spritzgegossenes Rohr aus. Der Grundkörper 101 weist dabei keinen Bereich auf, dessen Wandstärke d größer als 1,9 mm ist.

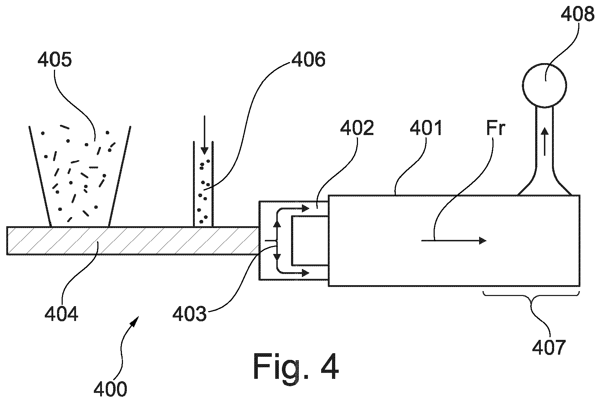

Der maximale Fließweg im Grundkörper 101 ist die Entfernung zwischen Anschnitt 402 (d.h. den Ort an der Spritzgussform, wo das verflüssigte Material in die Spritzgussform eingebracht wird, siehe Fig. 4) und dem zuletzt gefüllten Bereich (also dem Ende der Spritzgussform in Fließrichtung Fr des flüssigen Materials). Am Grundkörper 101 wird die Strecke vom Anschnitt bis zum Fließwegende gemessen, also vorliegend von dem Rohranfang bis zum Rohrende des Grundkörpers 101 gemessen.

Der Grundkörper 101 weist eine Vielzahl einzelner (beabstandeter) kleiner Gasblasen 102 auf, sodass eine geringe Gasblasenkonzentration vorliegt. Damit wird eine Festigkeitsverbesserung erreicht, da die Gasblasen 102 in der Spritzgussform die Verstärkungsfasern 103 von der Längsausrichtung in Fließrichtung Fr abdrängen und somit eine Ausrichtung der Verstärkungsfasern 103 quer, d.h. mit einem Winkel, zur Fließrichtung Fr ausbilden. Aufgrund der Festigkeitserhöhung des Bauteils 100, insbesondere gegenüber einer Krafteinwirkung senkrecht zur Fließrichtung Fr bzw. Längsrichtung des Rohrs, können spritzgegossene Bauteile 100 mit einer äußerst dünnen Wandstärke d (1,9 mm) jedoch mit einer äußerst langen Fließweglänge FL von über 300 mm geschaffen werden.

Der Faseranteil der Verstärkungsfasern 103 im Grundkörper 101 kann beispielsweise 5 Gew.% bis 60 Gew.% aufweisen. Durch diese erfindungsgemäße Gasblasenbeigabe 102 wird die Fließfähigkeit (im Sinne einer Reduktion der Gesamtviskosität) erhöht, was es wiederum erlaubt gleiche Fließweglängen FI zu erreichen wie ohne Gasblasen 102 aber mit einer niedrigeren Dosierungstemperatur.

Das Bauteil 100 weist ferner eine geringe Schrumpfung bzw. Schwindung auf. Die Schrumpfungsreduktion des erfindungsgemäßen Bauteils 100 durch die Gasblasen 101 führt zu einer homogeneren Oberfläche und eine mikroskaline Orangenhaut wird verhindert. So lässt sich auch auf der Innenseite oder der Außenseite des rohrartigen oder rohrförmigen Grundkörpers 101 eine Hochglanzqualität erreichen, welche wegen einer reduzierten Schwindung insbesondere bei der Ausformung keine Neigung zum Zerkratzen der Oberfläche zeigt.

Der Volumenanteil an Gasblasen 102 im Grundkörper 101 liegt insbesondere zwischen 0,3% bis 8%. Die Gasblasen 102 weisen einen Durchmesser zwischen 1 Mikrometer bis 100 Mikrometer auf. Die Größe der Gasblasen 102 kann beispielsweise durch die Wahl des Treibmittels, die Temperatur des Materials während der Spritzgießens, sowie mit der Abkühlgeschwindigkeit eingestellt werden.

Der Grundkörper 101 weist ferner Zersetzungspartikel 104 eines Gasblasen-bildenden Treibmittels auf. Die Zersetzungspartikel 104 sind in dem Grundkörper 101 vorzufinden und bilden feste Zersetzungsrückstande des ursprünglichen Treibmittels als Nebenprodukt der Gasbildung. Ein Volumenanteil der Zersetzungspartikel 104 des Treibmittels im Grundkörper liegt zwischen 0,1% bis 7%. Das Treibmittel ist insbesondere ein chemisches Treibmittel, welches insbesondere exotherm reaktionsfähig ist, wobei insbesondere zumindest mehr als die Hälfte der Zersetzungspartikel 104 des Treibmittels einen Durchmesser zwischen 0,1 Mikrometer bis 50 Mikrometer im Grundkörper 101 aufweisen.

Die Gasblasen 102 liegen ferner beabstandet voneinander im Grundkörper 101 vor. Durch die erfindungsgemäße Beigabe von Gasblasen 102 sind diese in einer Menge in dem Grundkörper vorhanden, in welcher sie mehrheitlich diskret in der Masse verweilen und nicht einen Schaumcharakter, bei dem sich Gasblasen 102 berühren, entwickeln.

Ein Verhältnis zwischen der Länge (z.B. die größte Erstreckung des Grundkörpers 101 in eine Raumrichtung) des Grundkörpers 101 und der dünnsten Wandstärke d des Grundkörpers 101 kann grösser als 50:1 aufweisen. Dies ist entsprechend möglich mit der erfindungsgemäßen Beimischung von Gasblasen 102 und Verstärkungsfasern 103, da eine ausreichende Festigkeit aufgrund der Faserausrichtung der Verstärkungsfasern 103 nicht parallel, d. h. mit einem Winkel α zur Fließrichtung Fr, erzielt werden kann.

Die Mehrzahl der Verstärkungsfasern 103 im Grundkörper 101 weisen einen Durchmesser zwischen 2 Mikrometer und 100 Mikrometer auf. Die Verstärkungsfasern 103 im Grundkörper 101 weisen eine Länge zwischen 0,05 mm und 4 mm auf.

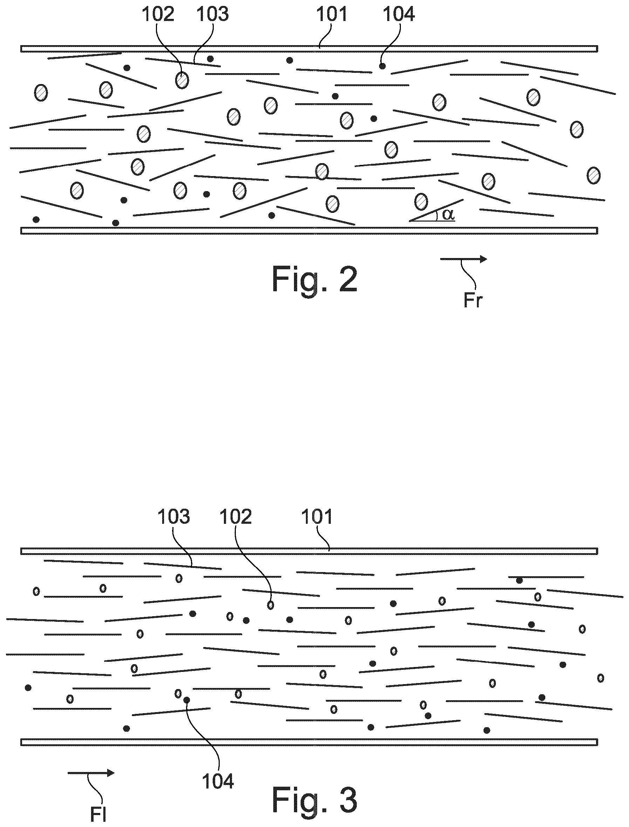

**Fig. 2** zeigt eine schematische Darstellung eines Bauteils 100 mit den entsprechenden Gasblasen 102 und Verstärkungsfasern 103 gemäß einer beispielhaften Ausführungsform der vorliegenden Erfindung. **Fig. 3** ein Bauteil 100, welches in einer Spritzgussform während des Spritzschließens vorliegt.

Der Grundkörper 101 weist eine Vielzahl einzelner (beabstandeter) kleiner Gasblasen 102 auf, sodass eine geringe Gasblasenkonzentration vorliegt. Damit wird eine Festigkeitsverbesserung erreicht, da die Gasblasen 102 in der Spritzgussform die Verstärkungsfasern 103 von der Längsausrichtung in Fließrichtung abdrängen und somit eine Ausrichtung der Verstärkungsfasern quer, d.h. mit einem Winkel α, zur Fließrichtung Fr ausbilden. Durch das 'Aufgehen' der Gasblasen wird erreicht, dass sich die Verstärkungsfasern 103, weniger parallel anordnen (d.h. die Verstärkungsfasern 103 werden durch eine kleine benachbarte Gasblase 102 aus der parallelen Ausrichtung weggedrückt). Insbesondere bei chemischem Treibmittel ist der Druck und der zeitliche Verlauf der Gasblasenbildung gut steuerbar.

In Fig. 3 wird der Zustand am Ende des Spritzgussprozesses, bzw. am Anfang des Auskühlens dargestellt. Die Gasblasen 102 haben sich auf die finale Größe entwickelt. Es ist zu erkennen, dass die Gasblasen 102 die Verstärkungsfasern 103 gegenüber einer gasfreien Version eines Bauteils etwas chaotischer verrückt, d.h. quergestellt haben, wodurch eine höhere Festigkeit aufgrund einer besseren Verzahnung erzielt wird. Durch den Innendruck der Gasblasen 102 findet auch während der Abkühlung ein Andrücken der Außenzone an die Spritzgusswand statt, sodass weniger Schrumpfung und eine bessere Oberflächenqualität erzielt werden kann. Ferner konnten die Gasblasen 102 insbesondere am Ende des Fließweges FI (wo die Einspritzmasse bereits etwas steifer ist als beim Einspritzpunkt (d.h. am Anschnitt) und deshalb der Nachdruck auf Einspritzseite weniger wirksam ist) die Funktion des Nachdruckes übernehmen, wodurch eine gleiche Schrumpfung nach Außen auf ganzer Länge des Bauteils 100 möglich ist.

Durch diese erfindungsgemäße Gasblasenbeigabe wird ferner die Fließfähigkeit (im Sinne einer Reduktion der Gesamtviskosität) erhöht, was es wiederum erlaubt gleiche Fließweglängen FI zu erreichen wie ohne Gasblasen aber mit einer tieferen Dosierungstemperatur.

Fig. 4 zeigt eine schematische Darstellung einer Herstellvorrichtung 400 gemäß einer beispielhaften Ausführungsform.

In der Herstellvorrichtung 400 wird ein Grundkörper 101 des Bauteils 100 spritzgegossen, wobei der Grundkörper 101 mit einer Wandstärke d von weniger als 1,9 mm hergestellt wird und in dem Grundkörper 101 eine Vielzahl Gasblasen 102 und Verstärkungsfasern 103 eingebettet werden. Eine Fließweglänge FI des spritzgegossenen Grundkörpers 101 beträgt über 300 mm.

Die Herstellvorrichtung 400 weist eine Spritzgussform 401 zum Spritzgießen des Grundkörpers 101 des Bauteils 100 auf. Die Spritzgussform 401 kann gegenüber üblichen Dimensionierungen überdimensioniert werden, um eine hohe Formstabilität zu erhalten. Diese besonders hohe Stabilität des Werkzeuges erlaubt es, eine Narbung an Werkzeugschließkanten der Spritzgussform 401 (also z.B. an Kontaktbereichen von zwei Werkzeughälften der Spritzgussform 401 (z.B., wenn jede Werkzeughälfte eine Rohrhalbschale darstellt) derart zu minimieren, dass im Bauteil 100 bzw. im Grundkörper 101 keine Oberflächenstörungen (Formkanten etc.) vorhanden sind.

Als Ausgangsmaterial 405 für den Grundkörper 101 wird z.B. ein Kunststoffgranulat einem Extruder 404 zugeführt, in welchem das Ausgangsmaterial 405 verflüssigt wird. Beispielsweise wird in dem Ausgangsmaterial 405 ein chemisches Treibmittel beigemischt, wobei später, z.B. erst in der Spritzgussform 401, durch Druck und/oder Temperatur die Gaserzeugung der chemischen Komponente aktiviert wird. Anschließend wird das verflüssigte Ausgangsmaterial 405 in die Spritzgussform 401 unter Druck eingespritzt, um den Grundkörper 101 auszubilden. In dem Extruder 404 werden zudem die Verstärkungsfasern 103 als Füllstoff hinzugefügt. Ferner kann ein physikalisches Treibmittel als Feststoff über eine Treibmittelzufuhr 406 in den Extruder 404 hinzugefügt werden, welches dann in der Spritzgussform 401 die Gasblasen 102 bildet. Ein Gewichtsanteil des Treibmittels beträgt an dem Gesamtmaterial vor dem Spritzgießen z.B. 1%.

Bei dem Spritzgießen eines Rohres (rohrförmigen Grundkörpers 101) wird das viskose Spritzgussmaterial zwischen einer äußeren Wandung der Spritzgussform 401 und einem inneren Dorn gedrückt. Wie in Fig. 4 dargestellt fließt das verflüssigte Ausgangsmaterial 405 entlang der Fließrichtung 403 vor der Spritzgussform 401 ans Randbereiche der Spritzgussform 401. Dort befindet sich der Anschnitt 402, durch welchen das verflüssigte Ausgangsmaterial 405 in die Spritzgussform 401 eingespritzt wird. Die Wandreibung an dem inneren Dorn und der äußeren Wandung der Spritzgussform 401 führt in der Regel zu einer starken parallelen Ausrichtung der Verstärkungsfasern 103 entlang der Fließrichtung FI in der Spritzgussform 401. Das Aufblähen der Gasblasen 102 führt hingegen zu einem Ablenkungseffekt der Verstärkungsfasern103 fort von der Parallelrichtung zur Fließrichtung FI, sodass die Verstrebungen der Verstärkungsfasern 103 erzielt werden und eine höhere Festigkeit in Rohrquerrichtung erzeugt wird.

Die Schmelze-Massefließrate (MFI) eines Materials (z.B. des verflüssigten Ausgangsmaterials 405) während des Spritzgießens des Grundkörpers 101 kann über 200 g/10 min eingestellt werden. Eine solch höhere Massefließrate kann zum Beispiel durch höhere Temperatur des eingespritzten verflüssigten Ausgangsmaterials 405 (z.B. eines Kunststoffes) erreicht werden.

Nach dem Spritzgießen des Grundkörpers 101 insbesondere als Rohrform können Enden in einer Endzone 407 abgeschnitten werden, um schadhafte Endstellen zu entfernen. Beispielsweise können 2mm bis 5 mm von einem in Längsrichtung ausgebildeten Ende des Grundkörpers 101 abgeschnitten werden. Die Endzone 407 bildet z.B. weniger als 30% der Gesamtlänge des Fließwegs Fr der Spritzgussform 401 aus. Dadurch werden insbesondere bei einer rohrartigen Ausbildung des Grundkörpers 101 schadvolle bzw. qualitativ minderwertige Anfangs- und Endbereiche, welche abgeschnitten werden müssen, reduziert und die Abfallmenge reduziert., dass weniger abgeschnitten werden muss.

Insbesondere reagiert während des Spritzgießens das Treibmittel exotherm und erzeugt in dem Grundkörper 101 die Gasblasen 102 und Zersetzungspartikel 104, wobei das Treibmittel derart über eine Treibmittelzufuhr 406 vor dem Spritzgießen beigefügt wird, dass nach dem Spritzgießen insbesondere zumindest mehr als die Hälfte der Zersetzungspartikel 104 des Treibmittels einen Durchmesser zwischen 0,1 Mikrometer bis 50 Mikrometer aufweisen.

Ferner weist die Spritzgussform 401 der Herstellvorrichtung 400 zumindest eine Entlüftung in der Endzone 407 eines Fließwegs der Spritzgussform 401 auf, wobei die Entlüftung ausgebildet ist, Unterdruck innerhalb der Spritzgussform 401 zu beaufschlagen. Beispielsweise kann an der Endzone 407 eine Vakuumpumpe 408 angeschlossen werde. Die Spritzgussform 401 kann somit während dem Spritzen evakuiert werden. Dies führt zu einer verstärkten Ausbildung der Gasblasen 102 und zu einer höheren Fließgeschwindigkeit des Ausgangsmaterials 405. Derselbe Effekt kann durch unterschiedliche Wärmezonen in der Spritzgussform 401 erreicht werden. Ergänzend ist darauf hinzuweisen, dass "umfassend" keine anderen Elemente oder Schritte ausschließt und "eine" oder "ein" keine Vielzahl ausschließt.

Bezugszeichen in den Ansprüchen sind nicht als Einschränkung anzusehen.

### Bezugszeichenliste:

- 100: Bauteil
- 101: Grundkörper
- 102: Gasblase
- 103: Verstärkungsfaser
- 104: Zersetzungspartikel

- 400: Herstellvorrichtung
- 401: Spritzgussform
- 402: Anschnitt
- 403: Fließrichtung vor der Spritzgussform
- 404: Extruder
- 405: Ausgangsmaterial
- 406: Treibmittelzufuhr
- 407: Endzone
- 408: Vakuumpumpe

- d: Wandstärke
- FI: Fließweglänge
- Fr: Fließrichtung
- α: Winkel

## Patentansprüche

1. Bauteil (100), aufweisend
einen spritzgegossenen Grundkörper (101),
wobei der Grundkörper (101) eine Wandstärke (d) von weniger als 1,9 mm aufweist,
wobei in dem Grundkörper (101) eine Vielzahl Gasblasen (102) und Verstärkungsfasern (103) eingebettet sind,
wobei eine Fließweglänge (Fl) des spritzgegossenen Grundkörpers (101) über 300 mm beträgt, **dadurch gekennzeichnet, dass**
der Grundkörper (101) Zersetzungspartikel (104) eines Gasblasen-bildenden Treibmittels aufweist,
wobei ein Volumenanteil der Zersetzungspartikel (104) des Treibmittels im Grundkörper (101) 0,1% bis 7% beträgt.

2. Bauteil (100) gemäß Anspruch 1,
wobei die Fließweglänge (FI) über 380 mm, insbesondere über 450 mm, weiter insbesondere über 500 mm, beträgt.

3. Bauteil (100) gemäß Anspruch 1 oder 2,
wobei die Wandstärke (d) unter 1,8 mm, insbesondere unter 1,7mm, weiter insbesondere unter 1,5mm, weiter insbesondere unter 1,4 mm liegt.

4. Bauteil (100) gemäß einem der Ansprüche 1 bis 3,
wobei der Faseranteil der Verstärkungsfasern (103) im Grundkörper (101) 5 Gew.% bis 60 Gew.% insbesondere 10 Gew.% bis 50 Gew.%, weiter insbesondere 20 Gew.% bis 40 Gew.% aufweist.

5. Bauteil (100) gemäß einem der Ansprüche 1 bis 4, wobei das Bauteil zumindest eines der folgenden Merkmale aufweist:
wobei der Grundkörper (101) zumindest einen rohrartigen Abschnitt aufweist,
wobei der Grundkörper (101) insbesondere als Rohr ausgebildet ist,
wobei der Grundkörper (101) derart ausgebildet ist, dass der Grundkörper (101) einen Temperatur-Schockwechseltest in einem Temperaturbereich zwischen -30 °C und +90 °C, insbesondere zwischen -40 °C und 120 °C, standhält.

6. Bauteil (100) gemäß einem der Ansprüche 1 bis 5,
wobei die Gasblasen (102) einen Durchmesser aufweisen zwischen 1 Mikrometer bis 100 Mikrometer, insbesondere 2 Mikrometer bis 50 Mikrometer, weitere insbesondere 2 Mikrometer bis 10 Mikrometer.

7. Bauteil (100) gemäß einem der Ansprüche 1 bis 6,
wobei der Grundkörper (101) einen Volumenanteil an Gasblasen (102) zwischen 0,3% bis 8% aufweist.

8. Bauteil (100) gemäß einem der Ansprüche 1 bis 7,
wobei insbesondere ein Volumenanteil der Zersetzungspartikel (104) des Treibmittels im Grundkörper (101) zwischen 0,3% bis 4%, insbesondere zwischen 0,5% bis 2% beträgt,
wobei das Treibmittel insbesondere ein chemisches Treibmittel ist, welches insbesondere exotherm reaktionsfähig ist,
wobei insbesondere zumindest mehr als die Hälfte der Zersetzungspartikel (104) des Treibmittels einen Durchmesser zwischen 0,1 Mikrometer bis 50 Mikrometer, insbesondere zwischen 1 Mikrometer bis 3 Mikrometer, aufweisen.

9. Bauteil (100) gemäß einem der Ansprüche 1 bis 8,
wobei die Gasblasen (102), insbesondere zumindest 80% aller Gasblasen (102), beabstandet voneinander im Grundkörper (101) vorliegen.

10. Bauteil (100) gemäß einem der Ansprüche 1 bis 9,
wobei ein Verhältnis zwischen der Länge des Grundkörpers (101) und der dünnsten Wandstärke (d) des Grundkörpers (101) grösser als 50: 1, insbesondere grösser als 100:1, weiter insbesondere grösser als 200: 1 ist,
wobei die Mehrzahl der Verstärkungsfasern (103) im Grundkörper (101) insbesondere einen Durchmesser zwischen 2 Mikrometer und 100 Mikrometer,
insbesondere zwischen 5 Mikrometer bis 24 Mikrometer, aufweisen, und/oder wobei die Mehrzahl der Verstärkungsfasern (103) im Grundkörper (101) eine Länge zwischen 0,05 mm und 4 mm, insbesondere zwischen 0,1 mm und 1 mm, aufweisen.

11. Verfahren zum Herstellen eines Bauteils (100) gemäß einem der Ansprüche 1 bis 10, das Verfahren aufweisend
Spritzgießen eines Grundkörpers (101) des Bauteils (100),
wobei sich der Grundkörper (101) eine Wandstärke (d) von weniger als 1,9 mm aufweist,
wobei in dem Grundkörper (101) eine Vielzahl Gasblasen (102) und Verstärkungsfasern (103) eingebettet werden, und
wobei eine Fließweglänge (FI) des spritzgegossenen Grundkörpers (101) über 300 mm beträgt,
wobei der Grundkörper (101) während des Spritzgiessens entlang eines Fließwegs einer Spritzgussform (401) ausgebildet wird, **dadurch gekennzeichnet, dass** in einer Endzone (407) des Fließwegs der Spritzgussform (401) über Entlüftungen in der Spritgussform Unterdruck innerhalb der Spritzgussform (401) beaufschlagt wird, und dass
die Endzone (407) weniger als 30% der Gesamtlänge des Fließwegs der Spritzgussform (401) ausbildet.

12. Verwendung des Bauteils (100) gemäß einem der Ansprüche 1 bis 10 in einem Kraftfahrzeug.

## Claims

1. A component (100), comprising
an injection-molded base body (101),
wherein the base body (101) has a wall thickness (d) of less than 1.9 mm, wherein a plurality of gas bubbles (102) and reinforcing fibers (103) are embedded in the base body (101),
wherein
a flow path length (Fl) of the injection-molded base body (101) is over 300 mm,
**characterized in that**
the base body (101) comprises decomposition particles (104) of a gas bubble-forming blowing agent,
wherein a volume fraction of the decomposition particles (104) of the blowing agent in the base body (101) is 0.1% to 7%.

2. The component (100) according to claim 1,
wherein the flow path length (FI) is over 380 mm, in particular over 450 mm, further in particular over 500 mm.

3. The component (100) according to claim 1 or 2,
wherein the wall thickness (d) is below 1.8 mm, in particular below 1.7 mm, further in particular below 1.5 mm, further in particular below 1.4 mm.

4. The component (100) according to any one of claims 1 to 3,
wherein the fiber content of the reinforcing fibers (103) in the base body (101) comprises 5 wt.% to 60 wt.%, in particular 10 wt.% to 50 wt.%, further in particular 20 wt.% to 40 wt.%.

5. The component (100) according to any one of claims 1 to 4, wherein the component comprises at least one of the following features:
wherein the base body (101) comprises at least one tubular section,
wherein the base body (101) is in particular formed as a tube,
wherein the base body (101) is formed such that the base body (101) withstands a temperature shock cycle test in a temperature range between -30 °C and +90 °C, in particular between -40 °C and 120 °C.

6. The component (100) according to any one of claims 1 to 5,
wherein the gas bubbles (102) have a diameter between 1 micrometer to 100 micrometers, in particular 2 micrometers to 50 micrometers, further in particular 2 micrometers to 10 micrometers.

7. The component (100) according to any one of claims 1 to 6,
wherein the base body (101) comprises a volume fraction of gas bubbles (102) between 0.3% to 8%.

8. The component (100) according to any one of claims 1 to 7,
wherein in particular a volume fraction of the decomposition particles (104) of the blowing agent in the base body (101) is between 0.3% to 4%, in particular between 0.5% to 2%,
wherein the blowing agent is in particular a chemical blowing agent which is in particular exothermically reactive,
wherein in particular at least more than half of the decomposition particles (104) of the blowing agent have a diameter between 0.1 micrometer to 50 micrometers, in particular between 1 micrometer to 3 micrometers.

9. The component (100) according to any one of claims 1 to 8,
wherein the gas bubbles (102), in particular at least 80% of all gas bubbles (102), are present spaced apart from one another in the base body (101).

10. The component (100) according to any one of claims 1 to 9,
wherein a ratio between the length of the base body (101) and the thinnest wall thickness (d) of the base body (101) is greater than 50:1, in particular greater than 100: 1, further in particular greater than 200:1,
wherein the plurality of reinforcing fibers (103) in the base body (101) in particular comprise a diameter between 2 micrometers and 100 micrometers, in particular between 5 micrometers to 24 micrometers, and/or
wherein the plurality of reinforcing fibers (103) in the base body (101) comprise a length between 0.05 mm and 4 mm, in particular between 0.1 mm and 1 mm.

11. A method for manufacturing a component (100) according to any one of claims 1 to 10, the method comprising
injection molding a base body (101) of the component (100),
wherein the base body (101) has a wall thickness (d) of less than 1.9 mm, wherein a plurality of gas bubbles (102) and reinforcing fibers (103) are embedded in the base body (101), and
wherein a flow path length (FI) of the injection-molded base body (101) is over 300 mm,
wherein the base body (101) is formed along a flow path of an injection mold (401) during the injection molding,
**characterized in that**
negative pressure is applied within the injection mold (401) in an end zone (407) of the flow path of the injection mold (401) via vents in the injection mold, and **in that**
the end zone (407) forms less than 30% of the total length of the flow path of the injection mold (401).

12. Use of the component (100) according to any one of claims 1 to 10 in a motor vehicle.

## Revendications

1. Composant (100), présentant
un corps de base (101) moulé par injection,
dans lequel le corps de base (101) présente une épaisseur de paroi (d) inférieure à 1,9 mm,
dans lequel une pluralité de bulles de gaz (102) et de fibres de renforcement (103) sont incorporées dans le corps de base (101),
dans lequel une longueur de chemin d'écoulement (FI) du corps de base (101) moulé par injection est supérieure à 300 mm, **caractérisé en ce que**
le corps de base (101) présente des particules de décomposition (104) d'un agent d'expansion formant des bulles de gaz,
dans lequel une proportion volumique des particules de décomposition (104) de l'agent d'expansion dans le corps de base (101) est comprise entre 0,1 % et 7 %.

2. Composant (100) selon la revendication 1,
dans lequel la longueur de chemin d'écoulement (FI) est supérieure à 380 mm, en particulier supérieure à 450 mm, en particulier supérieure à 500 mm.

3. Composant (100) selon la revendication 1 ou 2,
dans lequel l'épaisseur de paroi (d) est inférieure à 1,8 mm, en particulier inférieure à 1,7 mm, en particulier inférieure à 1,5 mm, en particulier inférieure à 1,4 mm.

4. Composant (100) selon l'une quelconque des revendications 1 à 3,
dans lequel la proportion de fibres des fibres de renforcement (103) dans le corps de base (101) est comprise entre 5 % en poids et 60 % en poids, en particulier comprise entre 10 % en poids et 50 % en poids, et plus particulièrement comprise entre 20 % en poids et 40 % en poids.

5. Composant (100) selon l'une quelconque des revendications 1 à 4, dans lequel le composant présente au moins une des caractéristiques ci-dessous :
le corps de base (101) présente au moins une section tubulaire,
le corps de base (101) est en particulier réalisé sous la forme d'un tube,
le corps de base (101) est réalisé de telle manière que le corps de base (101) résiste à un test de choc thermique dans une plage de température comprise entre -30°C et +90°C, en particulier comprise entre -40°C et 120°C.

6. Composant (100) selon l'une quelconque des revendications 1 à 5,
dans lequel les bulles de gaz (102) présentent un diamètre compris entre 1 micron et 100 microns, en particulier compris entre 2 microns et 50 microns, et plus particulièrement compris entre 2 microns et 10 microns.

7. Composant (100) selon l'une quelconque des revendications 1 à 6,
dans lequel le corps de base (101) présente une proportion volumique de bulles de gaz (102) comprise entre 0,3 % et 8 %.

8. Composant (100) selon l'une quelconque des revendications 1 à 7,
dans lequel en particulier une proportion volumique des particules de décomposition (104) de l'agent d'expansion dans le corps de base (101) est comprise entre 0,3 % et 4 %, en particulier comprise entre 0,5 % et 2 %,
dans lequel l'agent d'expansion est en particulier un agent d'expansion chimique qui est particulièrement exotherme, dans lequel en particulier au moins plus de la moitié des particules de décomposition (104) de l'agent d'expansion présentent un diamètre compris entre 0,1 micron et 50 microns, en particulier compris entre 1 micron et 3 microns.

9. Composant (100) selon l'une quelconque des revendications 1 à 8,
dans lequel les bulles de gaz (102), en particulier au moins 80 % de toutes les bulles de gaz (102), sont espacées les unes des autres au sein du corps de base (101).

10. Composant (100) selon l'une quelconque des revendications 1 à 9,
dans lequel un rapport de la longueur du corps de base (101) sur l'épaisseur de paroi (d) la plus mince du corps de base (101) est supérieur à 50:1, en particulier supérieur à 100:1, et plus particulièrement supérieur à 200:1,
dans lequel la majorité des fibres de renforcement (103) au sein du corps de base (101) présentent en particulier un diamètre compris entre 2 microns et 100 microns, en particulier compris entre 5 microns et 24 microns, et/ou dans lequel la majorité des fibres de renforcement (103) au sein du corps de base (101) présentent une longueur comprise entre 0,05 mm et 4 mm, en particulier comprise entre 0,1 mm et 1 mm.

11. Procédé de fabrication d'un composant (100) selon l'une quelconque des revendications 1 à 10, ledit procédé comprenant le moulage par injection d'un corps de base (101) du composant (100),
dans lequel le corps de base (101) présente une épaisseur de paroi (d) inférieure à 1,9 mm,
dans lequel une pluralité de bulles de gaz (102) et de fibres de renforcement (103) sont incorporées dans le corps de base (101), et
dans lequel une longueur de chemin d'écoulement (FI) du corps de base moulé par injection (101) est supérieure à 300 mm,
dans lequel le corps de base (101) est réalisé pendant le moulage par injection le long d'un chemin d'écoulement d'un moule d'injection (401), **caractérisé en ce que**, dans une zone d'extrémité (407) du chemin d'écoulement du moule d'injection (401), une pression négative est appliquée à l'intérieur du moule d'injection (401) par l'intermédiaire d'évents du moule d'injection, et
la zone d'extrémité (407) forme moins de 30 % de la longueur totale du chemin d'écoulement du moule d'injection (401).

12. Utilisation du composant (100) selon l'une quelconque des revendications 1 à 10 dans un véhicule à moteur.
